(19) Europäisches Patentamt
European Patent Office
Office européen des brevets

(11)  **EP 1 825 165 B1**

(12)  **EUROPÄISCHE PATENTSCHRIFT**

(45) Veröffentlichungstag und Bekanntmachung des Hinweises auf die Patenterteilung:
**11.03.2009   Patentblatt 2009/11**

(51) Int Cl.:
***F16D 65/14*** *(2006.01)*   ***F16D 66/00*** *(2006.01)*
***B60T 13/74*** *(2006.01)*

(21) Anmeldenummer: **05819343.4**

(22) Anmeldetag: **08.12.2005**

(86) Internationale Anmeldenummer:
**PCT/EP2005/056602**

(87) Internationale Veröffentlichungsnummer:
**WO 2006/061413 (15.06.2006 Gazette 2006/24)**

(54) **VERFAHREN UND VORRICHTUNG ZUM BETRIEB EINER HYDRAULISCHEN FAHRZEUGBREMSE**

METHOD AND DEVICE FOR THE OPERATION OF A HYDRAULIC VEHICLE BRAKE

PROCEDE ET DISPOSITIF POUR FAIRE FONCTIONNER UN FREIN HYDRAULIQUE DE VEHICULE

(84) Benannte Vertragsstaaten:
**DE FR**

(30) Priorität: **09.12.2004   DE 102004059584**
**06.12.2005   DE 102005058355**

(43) Veröffentlichungstag der Anmeldung:
**29.08.2007   Patentblatt 2007/35**

(73) Patentinhaber: **Continental Teves AG & Co. oHG**
**60488 Frankfurt am Main (DE)**

(72) Erfinder: **STRECKER, Andreas**
**60433 Frankfurt am Mian (DE)**

(56) Entgegenhaltungen:
**WO-A-20/04027282        US-A- 6 059 076**

**Beschreibung**

Die vorliegende Erfindung betrifft ein Verfahren zum Betrieb einer hydraulischen Fahrzeugbremse, mit einem Bremsgehäuse, in dem ein hydraulischer Betriebsdruckraum von einem verschieblich angeordneten Bremskolben begrenzt ist, der mit einer Bremsscheibe zur Erzielung einer Bremswirkung in Wirkverbindung bringbar ist und wobei eine Feststellbremsvorrichtung auf den Bremskolben wirkt und in einem Zustand, bei dem der Bremskolben mit der Bremsscheibe in Wirkverbindung steht, mittels einer Verriegelungsvorrichtung verriegelbar ist, wobei die Verriegelungsvorrichtung durch ein Kraftübertragungselement aktiviert wird, das mit Hilfe eines elektromagnetischen Aktuators, der mindestens eine Spule, ein Joch und einen Anker aufweist, betätigbar ist, und wobei die Position des mit dem Anker verbundenen Kraftübertragungselementes ermittelt wird, indem die Induktivitätsänderung der Spule in Abhängigkeit der Ankerbewegung ermittelt wird. Außerdem betrifft die Erfindung eine Vorrichtung zum Betrieb einer hydraulischen Fahrzeugbremse.

Eine derartige hydraulische Fahrzeugbremse ist beispielsweise aus der DE 10 2004 062 810 A1 bekannt. Um die Position des Kraftübertragungselementes bzw. des mit dem Kraftübertragungselement verbundenen Ankers zu bestimmen, wird die Induktivitätsänderung der Spule in Abhängigkeit der Ankerbewegung ermittelt. Allerdings ist das vorbekannte Verfahren mit Ungenauigkeiten behaftet.

Außerdem ist aus der WO 2004/027282 A1 eine hydraulische Fahrzeugbremse der eingangs genannten Gattung bekannt. Mit Hilfe einer Ermittlung der Induktivitätsänderung der Spule in Abhängigkeit der Ankerbewegung wird die Position eines vom Anker des Elektromagneten betätigbaren Schiebers ermittelt. Dieses Verfahren ist mit Ungenauigkeiten behaftet.

Es ist daher Aufgabe der vorliegenden Erfindung, das eingangs beschriebene Verfahren weiter zu verbessern, um eine höhere Genauigkeit zu erzielen.

Diese Aufgabe wird durch ein Verfahren mit den Merkmalen des Anspruchs 1 gelöst. Dabei ist vorgesehen, dass die Positionsermittlung des Kraftübertragungselementes derart durchgeführt wird, dass deren Ergebnis unabhängig von der Umgebungstemperatur ist und mit den folgenden Schritten durchgeführt wird:

(i) Ermittlung des elektrischen Widerstandes der Spule;
(ii) Vergleich des ermittelten elektrischen Widerstandes mit vorab bestimmten Werten und Bestimmung der Temperatur der Spule, des Jochs und des Anker;
(iii) Ermittlung des magnetischen Widerstandes des Jochs und des Ankers;
(iv) Ermittlung des Wirbelstroms im Joch und im Anker und
(v) Einspeisung eines rechteckförmigen Spannungssignals in die Spule und Messung des durch die Spule fließenden Stroms.

Durch diese Maßnahme wird die Positionsermittlung derart durchgeführt, dass das Ergebnis unabhängig von der Temperatur der Spule und/oder des Jochs und des Ankers ist.

Eine weitere, besonders vorteilhafte Ausführung des erfindungsgemäßen Verfahrens sieht vor, dass der temperaturabhängige Wirbelstromanteil im Joch und im Anker bei der Messung des durch die Spule fließenden Stroms berücksichtigt wird und das Messergebnis dementsprechend korrigiert wird. Da der Wirbelstromanteil die Strommessung verzerrt, ist eine Berücksichtung des Wirbelstromanteils und eine Korrektur des Messergebnisses besonders vorteilhaft.

Die vorab bestimmten Werte des elektrischen Widerstandes der Spule werden durch eine Kalibrierung ermittelt. Dabei ist vorgesehen, dass die Kalibrierung vor Inbetriebnahme der hydraulischen Fahrzeugbremse und/oder in regelmäßigen Abständen während des Betriebes erfolgt.

Die Aufgabe wird außerdem erfindungsgemäß durch eine Fahrzeugbremse mit den Merkmalen des Anspruchs 5 gelöst. Dabei sind Mittel vorgesehen, die die Positionsermittlung des Kraftübertragungselementes derart durchführen, dass deren Ergebnis unabhängig von der Umgebungstemperatur, von der Temperatur der Spule und/oder des Jochs und des Ankers ist, wobei die Mittel folgende Schritte durchführen:

(i) Ermittlung des elektrischen Widerstandes der Spule;
(ii) Vergleich des ermittelten elektrischen Widerstandes mit vorab bestimmten Werten und Bestimmung der Temperatur der Spule, des Jochs und des Anker;
(iii) Ermittlung des magnetischen Widerstandes des Jochs und des Ankers;
(iv) Ermittlung des Wirbelstroms im Joch und im Anker und
(v) Einspeisung eines rechteckförmigen Spannungssignals in die Spule und Messung des durch die Spule fließenden Stroms.

Die Erfindung wird nachfolgend anhand eines Ausführungsbeispiels im Zusammenhang mit der beiliegenden Zeichnung näher erläutert. In der Zeichnung zeigen:

Fig. 1    eine axiale Schnittdarstellung einer hydraulischen Fahrzeugbremse, an der das erfindungsgemäße Verfahren angewendet werden kann;

Fig. 2    ein Zeitdiagramm des in der Spule eines elektromagnetischen Aktuators gemessenen Stroms;

Fig. 3    ein Zeitdiagramm des im magnetischen Kreis eines elektromagnetischen Aktuators auftretenden Wirbelstroms bei verschiedenen magnetischen Widerständen des magnetischen Kreises;

Fig. 4    ein Diagramm; das den in der Spule gemessenen Strom dem magnetischen Widerstand im magnetischen Kreis bei verschiedenen Temperaturen gegenüberstellt;

Fig. 5    ein Diagramm, das den magnetischen Widerstand dem Luftspalt zwischen Spule und Anker des elektromagnetischen Aktuators gegenüber stellt:

Fig. 6    ein Diagramm, das den in der Spule gemessenen Strom dem Luftspalt gemäß Fig. 5 gegenüber stellt, bei verschiedenen Temperaturen.

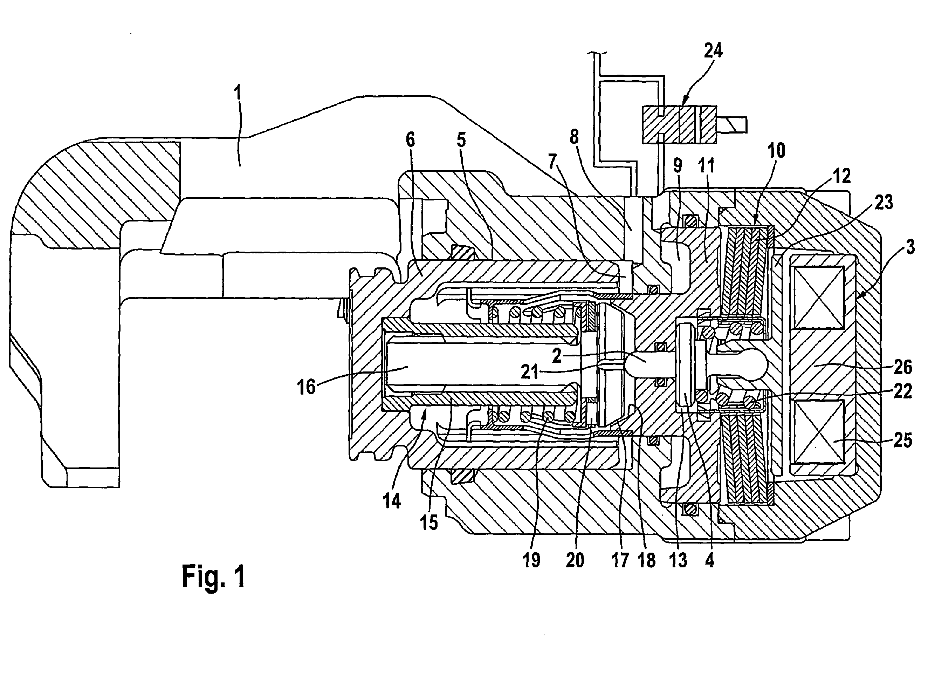

Die in Fig. 1 dargestellte hydraulische Fahrzeugbremse weist ein Bremsgehäuse 1 auf, welches den äußeren Rand einer nicht dargestellten Bremsscheibe und zwei ebenfalls nicht dargestellte Bremsbeläge umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann mittels eines hydraulischen Anschlusses 8 Bremsflüssigkeit zugeführt werden, so dass sich ein Bremsdruck aufbaut, der den Bremskolben 6 axial zur Bremsscheibe hin verschiebt. Dadurch wird der dem Bremskolben 6 zugewandte Bremsbelag gegen die Bremsscheibe gedrückt, wobei als Reaktion das Bremsgehäuse 1 sich in der entgegengesetzten Richtung verschiebt und dadurch auch den anderen Bremsbelag gegen die Bremsscheibe drückt.

Wie Fig. 1 außerdem zu entnehmen ist, ist ein Arbeitsspeicher 10 an der dem Bremskolben 6 abgewandten Seite des Bremsgehäuses 1 angeordnet. Der Arbeitsspeicher 10 besteht im Wesentlichen aus einem hydraulischen Speicherdruckraum 9, einem den Speicherdruckraum 9 begrenzenden Speicherkolben 11 sowie einem Federelement 12, das im gezeigten Beispiel als ein Paket von Tellerfedern ausgeführt ist und sich am Speicherkolben 11 abstützt. Die im Arbeitsspeicher 10 gespeicherte Energie wirkt während eines Feststellbremsvorganges auf den Bremskolben 6, wie nachfolgend noch näher erläutert wird. Dadurch wird erreicht, dass die auf die Bremsbeläge einwirkende Zuspannkraft von thermisch bedingten Längenänderungen im Bereich des Bremsgehäuses 1 nahezu unabhängig ist.

Eine Verriegelungsvorrichtung, die zur Realisierung einer Feststellbremsfunktion erforderlich ist, ist bei der in Fig. 1 dargestellten Ausführung durch ein Spindelgetriebe bzw. eine Gewindemutter-Spindel-Anordnung 14 gebildet. Die erwähnte Gewindemutter-Spindel-Anordnung 14 besteht aus einer Gewindemutter 15 sowie einer Spindel 16, die mittels eines nicht selbsthemmenden Gewindes miteinander in Verbindung stehen. Dabei ist die Gewindemutter 15 mit dem Bremskolben 6 starr verbunden, während die Spindel 16 an ihrem dem Bremskolben 6 abgewandten Ende eine vorzugsweise konische erste Reibfläche 17 aufweist, die mit einer im Speicherkolben 11 verdrehgesichert angeordneten zweiten Reibfläche 18 in- und außer Eingriff bringbar ist. Zu diesem Zweck ist ein Kraftübertragungselement 27 vorgesehen, das von einer zylindrischen Stufenbohrung 13 im Speicherkolben 11 aufgenommen wird und durch ihn hindurchragt und ein Zentrallager 21 für die Spindel 16 bildet. Nach einer Relativbewegung des Kraftübertragungselementes 27 gegenüber dem Speicherkolben 11 wird die Funktion des Zentrallagers 21 aufgehoben und die beiden Reibflächen 17, 18 stehen miteinander in Eingriff, wie nachfolgend noch näher erläutert wird. Außerdem spannt eine sich am Bremsgehäuse 1 abstützende Feder 19 unter Zwischenschaltung eines Axiallagers 20 die Spindel 16 in Richtung auf die zweite Reibfläche 18 bzw. auf das Zentrallager 21 vor.

Die hydraulische Fahrzeugbremse ist in Fig. 1 in gelöstem Zustand der Feststellbremse dargestellt. Zur Verriegelung der Feststellbremse wird durch einen nicht näher bestimmten Druckerzeuger zunächst sowohl im Betriebsdruckraum 7 als auch im Speicherdruckraum 9 ein hydraulischer Druck aufgebaut. Dazu muss ein elektrisch schaltbares Ventil, das vorzugsweise als ein stromlos geschlossenes (SG-) Ventil 24 ausgebildet ist, in seine offene Schaltstellung gebracht werden. Als Reaktion auf den Druckaufbau im Betriebsdruckraum 7 verschiebt sich der Bremskolben 6 in der Zeichnung nach links, während der Speicherkolben 11 in der Zeichnung nach rechts entgegen der Kraftwirkung des vorgespannten Federelements 12 verschoben wird. Bei diesem Vorgang wird das Federelement 12 komprimiert. Der Speicherkolben 11 nimmt dabei das Kraftübertragungselement 27 mit, indem sich ein am Kraftübertragungselement 27 ausgebildeter Kragen 4 am Übergang zwischen kleinerem und größerem Durchmesser der Stufenbohrung 13 abstützt. Der Speicherkolben 11 und damit das Kraftübertragungselement 27 werden durch den eben erwähnten Druckaufbau im Speicherdruckraum 9 in Fig. 1 nach rechts verschoben bis eine mit dem Kraftübertragungselement 27 in kraftübertragender Verbindung stehende Ankerplatte 23 an einem elektromagnetischen Aktuator 3 zur Anlage kommt. Bei diesem Vorgang liegt die Spindel 16 aufgrund der Kraftwirkung der Feder 19 weiterhin am Zentrallager 21 an, wodurch die beiden Reibflächen 17, 18 nicht in Eingriff treten können.

Anschließend wird der elektromagnetische Aktuator 3 bestromt, wodurch die Ankerplatte 23 in ihrer eben beschriebenen Anschlagposition vom elektromagnetischer Aktuator 3 arretiert wird. Bei einem anschließenden Druckabbau im Betriebsdruckraum 7 und im Speicherdruckraum 9 bewegt sich der Bremskolben 6 in der Zeichnung nach rechts während sich der Speicherkolben 11 nach links bewegt. Durch die Arretierung des Kraftübertragungselementes 27 wird eine Relativbewegung zwischen dem Kraftübertragungselement 27 und dem Speicherkolben 11 ermöglicht, wodurch die Funktion des Zentrallagers 21 für die Spindel 16 aufgehoben wird und die beiden Reibflächen 17, 18 miteinander in Eingriff gebracht werden. Das bereits erwähnte, vorgespannte Federelement 12 drückt den Speicherkolben 11, die aufgrund der in Eingriff gebrachten Reibflächen 17, 18 blockierte Spindel 16, die Gewindemutter 15 und damit den Bremskolben 6 in der Zeichnung nach links bzw. gegen die nicht dargestellte Bremsscheibe. Dadurch ist die Fahrzeugbremse in ihrem zugespannten Zustand verriegelt. Anschließend wird der elektromagnetische Aktuator 3 nicht mehr bestromt und die Ankerplatte 23 bzw. das Kraftübertragungselement 27 sind nicht mehr arretiert. Das Ventil 24 ist stromlos geschaltet und damit geschlossen. Die hydraulische Fahrzeugbremse benötigt also keine elektrische Energie und keinen hydraulischen Druck um die Verriegelung im zugespannten Zustand aufrecht zu erhalten, was als vorteilhaft anzusehen ist.

Zum Lösen der Verriegelung wird wiederum ein hydraulischer Druck im Betriebsdruckraum 7 sowie nach einer entsprechenden Ansteuerung des SG-Ventils 24 auch im Speicherdruckraum 9 ein hydraulischer Druck aufgebaut. Der hydraulische Druck würde wiederum den Bremskolben 6 in Fig. 1 nach links und den Speicherkolben 11 nach rechts verschieben. Allerdings ist es zur Entriegelung der Feststellbremse ausreichend, wenn der Speicherkolben 11 entlastet wird. Ein weiteres Federelement 22, welches das Kraftübertragungselement 27 zur Anlage am Übergang zwischen kleinerem und größerem Durchmesser der Stufenbohrung 13 bringt, drückt das Kraftübertragungselement 27 in Richtung der Spindel 16 und stößt die in Eingriff stehenden Reibflächen 17, 18 bei entsprechender Entlastung des Speicherkolbens 11 auf. Das Kraftübertragungselement 27 bildet anschließend wieder ein Zentrallager 21 für die Spindel 16.

Wie Fig. 1 zu entnehmen ist, sorgt das eben erwähnte weitere Federelement 22 darüber hinaus dafür, dass bei einer Betriebsbremsung, bei der nur der Betriebsdruckraum 7 mit Druck beaufschlagt wird, das Kraftübertragungselement 27 nicht verschoben wird, da es durch das weitere Federelement 22 entgegen der Kraftwirkung des hydraulischen Drucks im Betriebsdruckraum 7 vorgespannt ist. Der Speicherkolben 11 wird bei einer Betriebsbremsung ebenfalls nicht verschoben, da der dem Betriebsdruckraum 7 zugewandte Wirkdurchmesser des Speicherkolbens 11 kleiner ist als der Wirkdurchmesser des Bremskolbens 6. Außerdem wirkt das mit einer konstruktiv festgelegten Vorspannkraft ausgebildete Federelement 12 entgegen der Druckbeaufschlagung im Betriebsdruckraum 7, was eine Verschiebung des Speicherkolbens 11 während einer Betriebsbremsung ebenfalls verhindert.

Die Spule 25 des elektromagnetischen Aktuators 3 erfüllt die Funktion eines Sensors zur Erfassung der Position der Ankerplatte 23, bei der erkennbar ist, ob die Verriegelung der Fahrzeugbremse möglich ist oder nicht. Außerdem ist insbesondere das Anschlagen der Ankerplatte 23 am elektromagnetischen Aktuator 3 ein Signal für den nicht näher bestimmten Druckerzeuger, den Druckaufbau zur Durchführung eines Feststellbremsvorganges in den Druckräumen 7, 9 zu beenden. Um die Ankerplattenposition zuverlässig zu ermitteln, wird die durch die Ankerplattenbewegungen verursachte Induktivitätsänderung der Spule 25 des elektromagnetischen Aktuators 3 bestimmt. Dies geschieht, indem an die Spule 25 Spannungsimpulse angelegt werden. Gleichzeitig wird der Verlauf des durch die Spule 25 fließenden Stroms ermittelt. Dieser Stromverlauf lässt auf die Position der Ankerplatte 23 und damit auf die Position des Kraftübertragungselements 27 schließen. Verändert sich die Position der Ankerplatte 23, so ändert sich auch der Verlauf des durch die Spule 25 fließenden Stroms. Die Induktivitätsänderung der Spule 25 ist vor allem von der Größe des Spaltes zwischen der Ankerplatte 23 und dem Eisenjoch 26 des elektromagnetischen Aktuators 3 abhängig.

Da das eben beschriebene Verfahren zur Ermittlung der Position der Ankerplatte 23 bzw. des mit der Ankerplatte 23 verbundenen Kraftübertragungselementes 2 Ungenauigkeiten aufweist, ist es Aufgabe der vorliegenden Erfindung, das beschriebene Verfahren weiter zu verbessern, um eine höhere Genauigkeit zu erzielen. Der Grundgedanke ist dabei, dass der magnetische Widerstand die Induktivität der Spule 25 beeinflusst. Bei dem nachfolgend beschriebenen Verfahren werden die Wirbelströme temperaturabhängig berücksichtigt und dadurch eine erhöhte Präzision erzielt.

Im Folgenden wird das Messprinzip der Ankerplattenabstandssensierung durch Stromanstiegsmessung näher erläutert. Durch die Verschiebung der Ankerplatte 23 wird ein Luftspalt geöffnet, welcher den magnetischen Widerstand des Eisenkreises, der aus Joch 26 und Anker 23 gebildet wird, vergrößert. Die Vergrößerung des magnetischen Widerstandes führt zu einer Verringerung der Induktivität. Diese Änderung soll gemessen werden.

Für jede Spule gilt vereinfacht:

$$I(t) = I_{MAX} \cdot (1 - e^{-\frac{t}{\tau}}) .\qquad (\text{I})$$

$$L = \frac{N \cdot \Phi}{I} = \frac{N^2}{R_{Magnetisch}} \qquad (II)$$

Mit $\tau = \dfrac{L}{R}$; $I_{MAX} = \dfrac{U}{R}$; $U = const.$; $R = const.$

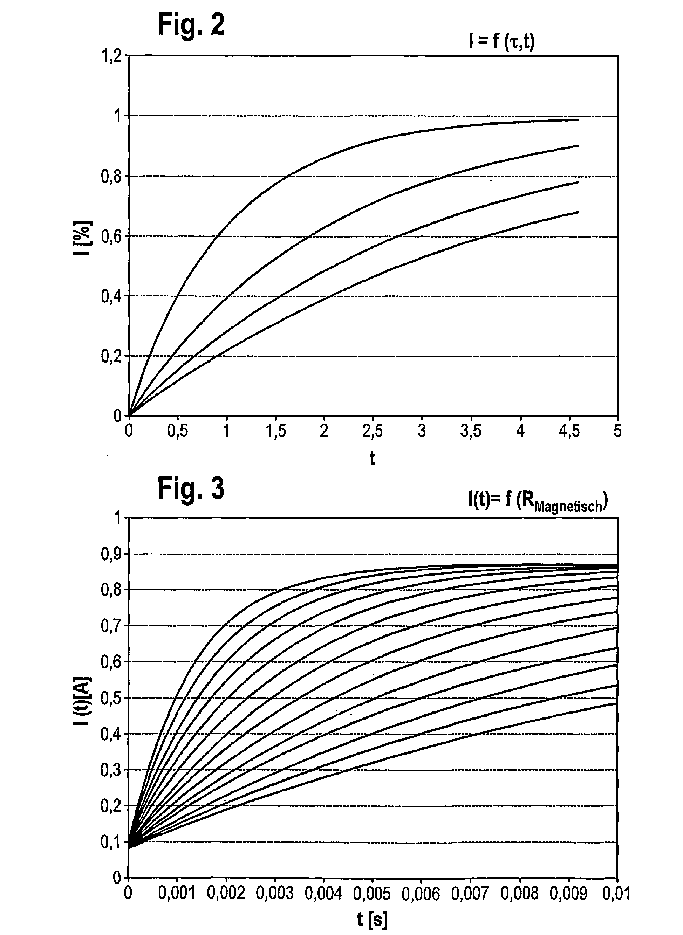

lässt sich die Induktivität L durch eine einzelne Messung des Stroms zu einem geeigneten Zeitpunkt t ermitteln, wenn U und R bekannt und konstant sind. Eine graphische Darstellung mit verschiedenen Werten für $\tau$ ist in Fig. 2 dargestellt.

Wirbelströme entstehen in ausgedehnten elektrischen Leitern und sind die Folge einer Magnetfeldänderung. Das Magnetfeld der Spule 25 wird im Magnettopf und der Ankerplatte 23 gebündelt. Das Magnetfeld ist proportional zum Strom. Die Magnetfeldänderung ist proportional zur Stromänderung. Der Wirbelstrom ist proportional zur Magnetfeldänderung und das Wirbelstrommagnetfeld ist proportional zum Wirbelstrom.

Das Wirbelstrommagnetfeld ist außerdem dem Vorzeichen nach seiner Ursache, dem Magnetfeld der Spule 25, entgegengerichtet. Der Wirbelstrom im Eisenkreis 23, 26 ist dem Strom in der Spule 25 entgegengesetzt. Daraus folgt, dass der Stromanstieg zu Beginn stärker ist als die reine Exponential-Funktion.

Es gilt:

$$\Phi = \frac{N \cdot I}{R_{Magnetisch}} \qquad (III)$$

daraus folgt

$$\frac{d\Phi}{dt} = \frac{N \cdot \dfrac{dI}{dt}}{R_{Magnetisch}} \qquad (IV)$$

Daraus folgt für die Induzierte Spannung im Eisenkreis:

$$U_{ind} = -N_{Eisen} \frac{d\Phi}{dt} \qquad (V)$$

Der Wirbelstrom ist eine Folge der Induzierten Spannung im Eisenkreis, mit $N_{Eisen} = 1$ und $I_{ind} = \dfrac{U_{ind}}{R_{el.Eisen}}$ folgt:

$$I_{ind} = \frac{-\dfrac{d\Phi}{dt}}{R_{el.Eisen}} = \frac{\dfrac{-N \cdot \dfrac{dI}{dt}}{R_{Magnetisch}}}{R_{el.Eisen}} = \frac{-N}{R_{el.Eisen} \cdot R_{Magnetisch}} \cdot \frac{dI}{dt} \cdot \qquad (VI)$$

Mit

$$\frac{dI}{dt} = \frac{I_{Max}}{\tau} \cdot e^{-\frac{t}{\tau}} \qquad \text{folgt} \qquad I_{ind} = \frac{-N}{R_{el.Eisen} \cdot R_{Magnetisch} \cdot \tau} \cdot I_{Max} \cdot e^{-\frac{t}{\tau}} \qquad \text{(VII)}$$

Der induzierte Wirbelstrom verursacht wiederum ein Magnetfeld:

$$\Phi_{ind} = \frac{N_{Eisen} \cdot I_{ind}}{R_{Magnetisch}} = \frac{-N}{R_{el.Eisen} \cdot R^2_{Magnetisch} \cdot \tau} \cdot I_{Max} \cdot e^{-\frac{t}{\tau}} \qquad \text{(VIII)}$$

Die Addition von Spulenfeld und Wirbelstromfeld ergibt:

$$\Phi_{ges} = \Phi + \Phi_{ind} = \frac{N \cdot I}{R_{Magnetisch}} - \frac{N}{R_{el.Eisen} \cdot R^2_{Magnetisch}} \cdot \frac{I_{Max}}{\tau} \cdot e^{-\frac{t}{\tau}}$$

$$= \frac{I_{Max} \cdot N}{R_{Magnetisch}} \cdot \left( 1 - e^{-\frac{t}{\tau}} - \frac{e^{-\frac{t}{\tau}}}{R_{Magnetisch} \cdot R_{el.Eisen} \cdot \tau} \right) \qquad \text{(IX)}$$

$$= \frac{I_{Max} \cdot N}{R_{Magnetisch}} \cdot \left( 1 - e^{-\frac{t}{\tau}} \cdot \left( 1 + \frac{1}{R_{Magnetisch} \cdot R_{el.Eisen} \cdot \tau} \right) \right)$$

Mit

$$I(t) = \Phi(t) \cdot \frac{R_{Magnetisch}}{N} \qquad \text{(X)}$$

folgt:

$$I(t) = I_{Max} \cdot \left( 1 - e^{-\frac{t}{\tau}} \cdot \left( 1 + \frac{1}{R_{Magnetisch} \cdot R_{el.Eisen} \cdot \tau} \right) \right) \qquad \text{(XI)}$$

Man erkennt, dass es sich um die ursprüngliche Exponential-Funktion handelt, mit einem Faktor bei e. Dieser ist abhängig von T und somit von $R_{Magnetisch}$.

$$\tau = \frac{L}{R_{el.Spule}} \quad \text{und} \quad L = \frac{N^2}{R_{Magnetisch}} \quad \text{also} \quad \tau = \frac{N^2}{R_{Magnetisch} \cdot R_{el.Spule}}$$

folgt:

$$I(t) = I_{Max} \cdot \left( 1 - e^{-\frac{t}{\frac{N^2}{R_{Magnetisch} \cdot R_{el.Spule}}}} \cdot \left( 1 - \frac{R_{el.Spule}}{R_{el.Eisen} \cdot N^2} \right) \right)$$

$$= \frac{U_0}{R_{el.Spule}} \cdot \left( 1 - e^{-\frac{t \cdot R_{Magnetisch} \cdot R_{el.Spule}}{N^2}} \cdot \left( 1 - \frac{R_{el.Spule}}{R_{el.Eisen} \cdot N^2} \right) \right) \qquad (XII)$$

In dieser Formel tauchen außer $R_{Magnetisch}$ nur bekannte Größen auf. Eine graphische Darstellung ist in Fig. 3 für verschiedene magnetischen Widerstän, dargestellt.

Auf die Auswirkung des Wirbelstroms auf den zeitlichen Verlauf I(t) bei verschiedenen magnetischen Widerständen ohne Temperatureinfluss wird später noch näher eingegangen. Der Wirbelstrom macht sich als scheinbarer Offset des Stroms bemerkbar. Dies kann im Versuch nicht so beobachtet werden. Es fehlt also ein Baustein zum Modell. Das Modell kann ergänzt werden um eine ideale Induktivität in Reihe zum Serienwiderstand. Sie beschreibt das Streu- und Luftfeld, welches nicht im Eisenkreis 23, 26 gebündelt wird und folglich auch keinen Wirbelstrom zur Folge hat. Das Modell ist aber gültig für genügend große Zeitintervalle t1, die Abweichung des Stromverlaufs über der Zeit wird dann beliebig klein.

Mit Temperatureinfluss erhält man folgende Formel für den Strom:

$$I(t;T) = I_{Max}(T) \cdot \left( 1 - e^{-\frac{t}{\frac{N^2}{R_{Magnetisch} \cdot R_{el.Spule} \cdot (1 + \alpha_{Cu} \cdot \Delta T)}}} \cdot \left( 1 - \frac{R_{el.Spule} \cdot (1 + \alpha_{Cu} \cdot \Delta T)}{R_{el.Eisen} \cdot (1 + \alpha_{Fe} \cdot \Delta T) \cdot N^2} \right) \right)$$

$$= \frac{U_0}{R_{el.Spule} \cdot (1 + \alpha_{Cu} \cdot \Delta T)} \cdot \left( 1 - e^{-\frac{t \cdot R_{Magnetisch} \cdot R_{el.Spule} \cdot (1 + \alpha_{Cu} \cdot \Delta T)}{N^2}} \cdot \left( 1 - \frac{R_{el.Spule} \cdot (1 + \alpha_{Cu} \cdot \Delta T)}{R_{el.Eisen} \cdot (1 + \alpha_{Fe} \cdot \Delta T) \cdot N^2} \right) \right)$$

$$(XIII)$$

Entsprechend erhält man für den magnetischen Widerstand:

$$1 - \frac{I(t) \cdot R_{el.Spule}}{U_0} = e^{-\frac{t \cdot R_{Magnetisch} \cdot R_{el.Spule}}{N^2}} \cdot \left(1 - \frac{R_{el.Spule}}{R_{el.Eisen} \cdot N^2}\right)$$

$$\frac{1 - \dfrac{I(t) \cdot R_{el.Spule}}{U_0}}{1 - \dfrac{R_{el.Spule}}{R_{el.Eisen} \cdot N^2}} = e^{-\frac{t \cdot R_{Magnetisch} \cdot R_{el.Spule}}{N^2}}$$

$$\ln\left[\frac{1 - \dfrac{I(t) \cdot R_{el.Spule}}{U_0}}{1 - \dfrac{R_{el.Spule}}{R_{el.Eisen} \cdot N^2}}\right] = -\frac{t \cdot R_{Magnetisch} \cdot R_{el.Spule}}{N^2}$$

$$R_{Magnetisch} = -\ln\left[\frac{1 - \dfrac{I(t) \cdot R_{el.Spule}}{U_0}}{1 - \dfrac{R_{el.Spule}}{R_{el.Eisen} \cdot N^2}}\right] \cdot \frac{N^2}{t \cdot R_{el.Spule}}$$

(XIV)

Allerdings sind $R_{Magnetisch}$, $R_{el.Eisen}$ und $R_{el.Spule}$ temperaturabhängige Größen. Die Temperatur der Spule 25 ist messbar über eine Kalibrierung im Werk bei bekannter Temperatur und die $I_{Max}$-Messung zu Beginn eines Zündungslaufs bzw. einer Aktivierung. Es muss dann angenommen werden, dass dieselbe Temperatur auch im Eisenkreis 23, 26 herrscht. Da sich die Bauteile auf engstem Raum befinden, sollte dies gültig sein. Während für die elektrischen Widerstände relativ einfache Zusammenhänge gelten, kann für die Temperaturabhängigkeit des magnetischen Widerstands bisher nur eine grobe Näherung angegeben werden, es wird angenommen, dass keine Temperaturabhängigkeit im zu verwendenden Temperaturbereich vorliegt. Für den elektrischen Spulenwiderstand gilt :

$$R_{el.Spule} = f(T) = R(25°C) \cdot (1 + \alpha \cdot \Delta T)$$

Für Kupfer liegt $\alpha$ bei 0,0039 1/K .
Die minimale Temperatur liegt praktisch bei -40°C, die maximale bei +140°C.
Der minimale Widerstand liegt also bei 74,65%, der maximale bei 144,48% des Nominalwertes.
Für Stahl liegt $\alpha$ bei 0,0048 1/K .
Der minimale Widerstand liegt also bei 68,80% der maximale bei 155,2% des Nominalwertes.
Für $R_{Magnetisch}$ soll zunächst angenommen werden, dass keine Temperaturabhängigkeit vorliegt, zumindest ist die Abhängigkeit bei geringen Temperaturen sehr klein.
Dann gilt:

$$R_{Magnetisch} = -\ln\left[\frac{1 - \dfrac{I(t) \cdot R_{el.Spule} \cdot (1 + \alpha_{Cu} \cdot \Delta T)}{U_0}}{1 - \dfrac{R_{el.Spule} \cdot (1 + \alpha_{Cu} \cdot \Delta T)}{R_{el.Eisen} \cdot (1 + \alpha_{Fe} \cdot \Delta T) \cdot N^2}}\right] \cdot \frac{N^2}{t \cdot R_{el.Spule} \cdot (1 + \alpha_{Cu} \cdot \Delta T)}$$

(XV)

Wobei $R_{el.Spule}$ direkt gemessen wird, indem für $t = 100\,ms \approx t\,\alpha\,\infty$ der Strom bei einer Spannung von z.B. 1,8 V gemessen wird. Die Kalibrierung im Werk hat also nur einen Einfluß auf die angenommene Temperatur des Eisenanteils also auf die Berechnung von $R_{el.Eisen} = f(\Delta\mathrm{T})=f(I(t=100\,ms,U_0=1{,}8\,V,T))$.

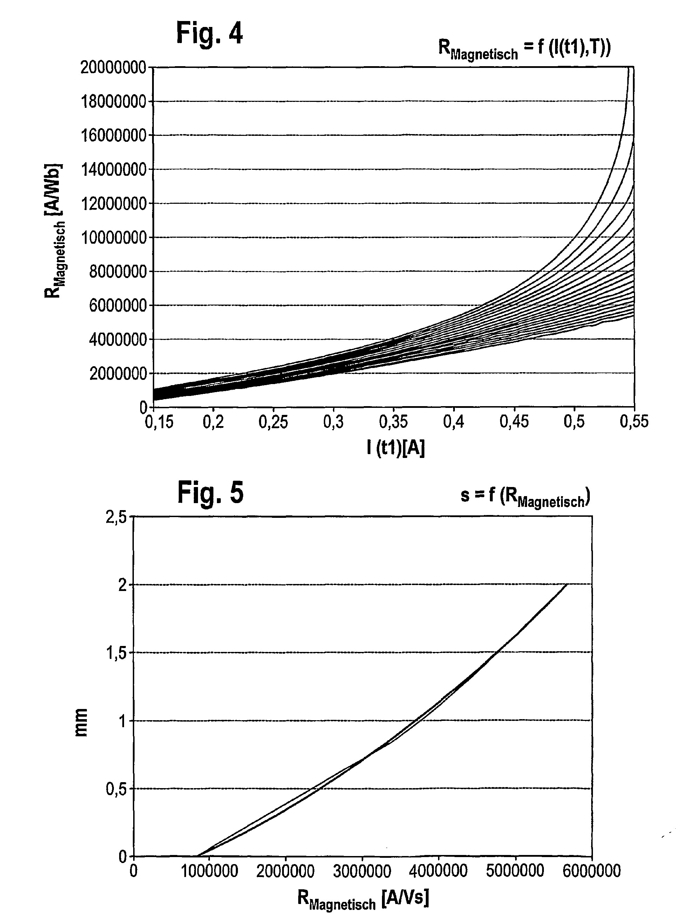

Die Anwendung der theoretischen Formeln ist nach Anpassung der Parameter an Messungen in Fig. 4 dargestellt. Auf der x-Achse in Fig. 4 ist der gemessene Strom zum Zeitpunkt t1=0,002 s aufgetragen. Je nach Temperatur ist eine der Kurven auszuwählen und der magnetische Widerstand kann auf der y-Achse abgelesen werden.

Aus denselben Labormessungen, mit deren Hilfe die Parameter gefunden wurden, kann nun die Funktion s=f($R_{Magnetisch}$) gebildet werden, deren graphische Darstellung in Fig. 5 dargestellt ist.

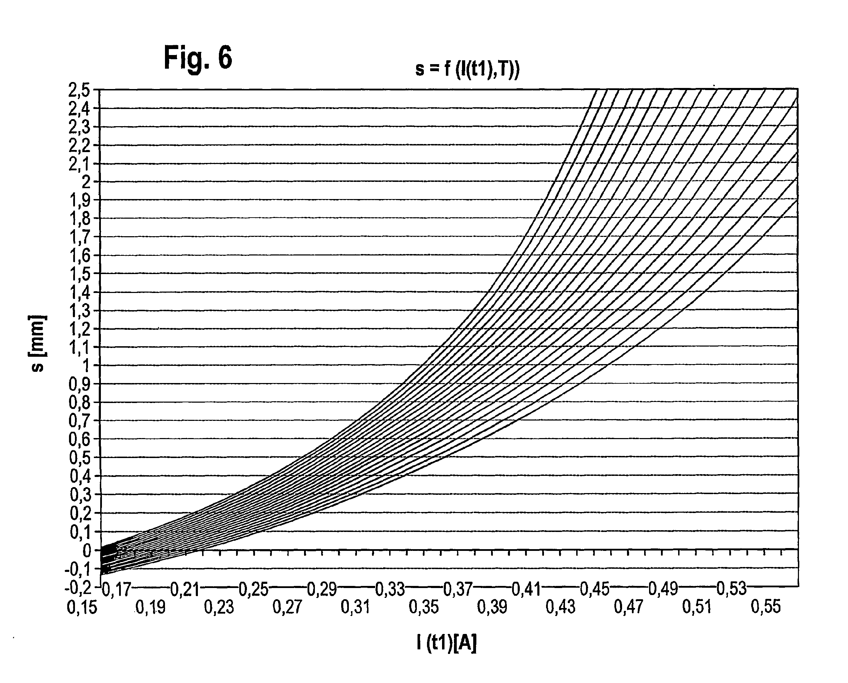

Mit Hilfe der Polynomischen Formel kann jedes $R_{Magnetisch}$, welches ja nun temperaturkompensiert berechnet werden kann, in einen Abstand s, der dem Luftspalt zwischen Ankerplatte 23 und Joch 26 entspricht, transformiert werden (vgl. Fig. 6) .

Der ohmsche Widerstand der Spule 25 bei T0=25°C kann im Werk ermittelt werden. Über Diagnosefunktionen sollte es auch einer Werkstatt möglich sein, bei einem Austausch des Bremssattels diese Messung auszulösen. Durch Messung des ohmschen Widerstands der Spule 25 vor Beginn eines Sensierungszyklus kann die Temperatur der Spule 25 und damit auch des Eisenkreises 23, 26 ermittelt werden. Mit Hilfe der Temperatur kann die gültige Kennlinie ermittelt werden, es besteht also ein eindeutiger Zusammenhang zwischen Strom, Temperatur, Einschaltdauer, Spannung und dem Messergebnis.

Ein entscheidender Vorteil des Verfahrens ist die Temperaturkompensation durch Messung des ohmschen Widerstands der Spule 25 im Werk bei bekannter Temperatur und vor jeder Sensierung. Erst dadurch wird es möglich, die Ankerposition absolut zu messen. Ein weiterer Vorteil ist die mathematische Geschlossenheit der Lösung, ein mathematisches Näherungsverfahren ist nicht notwendig. Ein weiterer Vorteil ist die temperaturabhängige Berücksichtigung der Wirbelströme, dies führt zu einer höheren Präzision.

**Patentansprüche**

1.    Verfahren zum Betrieb einer hydraulischen Fahrzeugbremse, mit einem Bremsgehäuse (1), in dem ein hydraulischer Betriebsdruckraum (7) von einem verschieblich angeordneten Bremskolben (6) begrenzt ist, der mit einer Bremsscheibe zur Erzielung einer Bremswirkung in Wirkverbindung bringbar ist und wobei eine Feststellbremsvorrichtung auf den Bremskolben (6) wirkt und in einem Zustand, bei dem der Bremskolben (6) mit der Bremsscheibe in Wirkverbindung steht, mittels einer Verriegelungsvorrichtung verriegelbar ist, wobei die Verriegelungsvorrichtung durch ein Kraftübertragungselement (2) aktiviert wird, das mit Hilfe eines elektromagnetischen Aktuators (3), der mindestens eine Spule (25), ein Joch (26) und einen Anker (23) aufweist, betätigbar ist, und wobei die Position des mit dem Anker (23) verbundenen Kraftübertragungselementes (2) ermittelt wird, indem die Induktivitätsänderung der Spule (25) in Abhängigkeit der Ankerbewegung ermittelt wird, **dadurch gekennzeichnet, dass** die Positionsermittlung des Kraftübertragungselementes (2) derart durchgeführt wird, dass deren Ergebnis unabhängig von der Umgebungstemperatur ist und mit den folgenden Schritten durchgeführt wird:

(i) Ermittlung des elektrischen Widerstandes der Spule (25);
(ii) Vergleich des ermittelten elektrischen Widerstandes mit vorab bestimmten Werten und Bestimmung der Temperatur der Spule (25), des Jochs (26) und des Anker (23);
(iii) Ermittlung des magnetischen Widerstandes des Jochs (26) und des Ankers (23);
(iv) Ermittlung des Wirbelstroms im Joch (26) und im Anker (23) und
(v) Einspeisung eines rechteckförmigen Spannungssignals in die Spule (25) und Messung des durch die Spule (25) fließenden Stroms.

2.    Verfahren nach Anspruch 1, **dadurch gekennzeichnet, dass** der temperaturabhängige Wirbelstromanteil im Joch (26) und im Anker (23) bei der Messung des durch die Spule (25) fließenden Stroms berücksichtigt wird und das Messergebnis dementsprechend korrigiert wird.

3.    Verfahren nach Anspruch 1 oder 2, **dadurch gekennzeichnet, dass** die vorab bestimmten Werte des elektrischen Widerstandes der Spule (25) durch eine Kalibrierung ermittelt werden.

4.    Verfahren nach Anspruch 3, **dadurch gekennzeichnet, dass** die Kalibrierung vor Inbetriebnahme der hydraulischen Fahrzeugbremse und/oder in regelmäßigen Abständen während des Betriebes erfolgt.

5.    Hydraulische Fahrzeugbremse, mit einem Bremsgehäuse (1), in dem ein hydraulischer Betriebsdruckraum (7) von einem verschieblich angeordneten Bremskolben (6) begrenzt ist, der mit einer Bremsscheibe zur Erzielung einer Bremswirkung in Wirkverbindung bringbar ist und wobei eine Feststellbremsvorrichtung auf den Bremskolben (6) wirkt und in einem Zustand, bei dem der Bremskolben (6) mit der Bremsscheibe in Wirkverbindung steht, mittels einer Verriegelungsvorrichtung verriegelbar ist, wobei die Verriegelungsvorrichtung durch ein Kraftübertragungselement (2) aktiviert wird, das mit Hilfe eines elektromagnetischen Aktuators (3), der mindestens eine Spule (25), ein Joch (26) und einen Anker (23) aufweist, betätigbar ist, und wobei die Position des mit dem Anker (23) verbundenen Kraftübertragungselementes (2) ermittelt wird, indem die Induktivitätsänderung der Spule (25) in Abhängigkeit der Ankerbewegung ermittelt wird, **dadurch gekennzeichnet, dass** Mittel vorgesehen sind, die die Positionsermittlung des Kraftübertragungselementes (2) derart durchführen, dass deren Ergebnis unabhängig von der Umgebungstemperatur, von der Temperatur der Spule (25) und/oder des Jochs (26) und des Ankers (23) ist und dass die Mittel folgende Schritte durchführen:

(i) Ermittlung des elektrischen Widerstandes der Spule (25);
(ii) Vergleich des ermittelten elektrischen Widerstandes mit vorab bestimmten Werten und Bestimmung der Temperatur der Spule (25), des Jochs (26) und des Anker (23);
(iii) Ermittlung des magnetischen Widerstandes des Jochs (26) und des Ankers (23);
(iv) Ermittlung des Wirbelstroms im Joch (26) und im Anker (23) und
(v) Einspeisung eines rechteckförmigen Spannungssignals in die Spule (25) und Messung des durch die Spule (25) fließenden Stroms.

## Claims

1. Method for operating a hydraulic vehicle brake, having a brake housing (1) in which a hydraulic operating pressure space (7) is bounded by a moveably arranged brake piston (6) which can be operatively connected to a brake disc in order to provide a braking effect, and with a parking brake apparatus acting on the brake piston (6) and it being possible to lock said parking brake apparatus by means of a locking apparatus in a state in which the brake piston (6) is operatively connected to the brake disc, with the locking apparatus being activated by a force-transmission element (2) which can be operated with the aid of an electromagnetic actuator (3) which has at least a coil (25), a yoke (26) and an armature (23), and with the position of the force-transmission element (2) which is connected to the armature (23) being ascertained by the change in inductance of the coil (25) being ascertained as a function of the armature movement, **characterized in that** the position of the force-transmission element (2) is ascertained in such a way that the result of this operation is independent of the ambient temperature and is carried out by way of the following steps:

(i) ascertaining the electrical resistance of the coil (25);
(ii) comparing the ascertained electrical resistance with predetermined values and determining the temperature of the coil (25), of the yoke (26) and of the armature (23) ;
(iii) ascertaining the magnetic resistance of the yoke (26) and of the armature (23);
(iv) ascertaining the eddy current in the yoke (26) and in the armature (23), and
(v) feeding a square-wave voltage signal to the coil (25) and measuring the current flowing through the coil (25).

2. Method according to Claim 1, **characterized in that** the temperature-dependent eddy current component in the yoke (26) and in the armature (23) is taken into account when measuring the current flowing through the coil (25) and the measurement result is accordingly corrected.

3. Method according to Claim 1 or 2, **characterized in that** the predetermined values of the electrical resistance of the coil (25) are ascertained by calibration.

4. Method according to Claim 3, **characterized in that** the calibration is performed before the hydraulic vehicle brake is put into operation and/or at regular intervals during operation.

5. Hydraulic vehicle brake, having a brake housing (1) in which a hydraulic operating pressure space (7) is bounded by a moveably arranged brake piston (6) which can be operatively connected to a brake disc in order to provide a braking effect, and with a parking brake apparatus acting on the brake piston (6) and it being possible to lock said parking brake apparatus by means of a locking apparatus in a state in which the brake piston (6) is operatively connected to the brake disc, with the locking apparatus being activated by a force-transmission element (2) which can be operated with the aid of an electromagnetic actuator (3) which has at least a coil (25), a yoke (26) and an armature (23), and with the position of the force-transmission element (2) which is connected to the armature (23) being ascertained by the change in inductance of the coil (25) being ascertained as a function of the armature movement, **characterized in that** means are provided which ascertain the position of the force-transmission element (2) in such a way that the result of this operation is independent of the ambient temperature, of the temperature of the coil (25) and/or of the yoke (26) and of the armature (23), and **in that** the means carry out the following steps:

(i) ascertaining the electrical resistance of the coil (25) ;
(ii) comparing the ascertained electrical resistance with predetermined values and determining of the temperature of the coil (25), of the yoke (26) and of the armature (23) ;
(iii) ascertaining the magnetic resistance of the yoke (26) and of the armature (23);
(iv) ascertaining the eddy current in the yoke (26) and in the armature (23), and
(v) feeding a square-wave voltage signal to the coil (25) and measuring the current flowing through the coil (25).

**Revendications**

1. Procédé pour faire fonctionner un frein hydraulique de véhicule, avec un boîtier de frein (1), dans lequel une chambre de pression de fonctionnement hydraulique (7) est délimitée par un piston de frein coulissant (6), qui peut être mis en liaison active avec un disque de frein pour produire un effet de freinage et dans lequel un dispositif de frein de stationnement agit sur le piston de frein (6) et peut être verrouillé au moyen d'un dispositif de verrouillage dans un état dans lequel le piston de frein (6) est en liaison active avec le disque de frein, dans lequel le dispositif de verrouillage est activé par un élément de transmission de force (2) qui peut être actionné à l'aide d'un actionneur électromagnétique (3), qui comporte au moins une bobine (25), une armature (26) et un induit (23), et dans lequel on détecte la position de l'élément de transmission de force (2) relié à l'induit (23) en déterminant la variation d'inductance de la bobine (25) en fonction du mouvement de l'induit, **caractérisé en ce que** l'on effectue la détection de la position de l'élément de transmission de force (2) de telle manière que son résultat soit indépendant de la température ambiante et qu'elle soit exécutée avec les étapes suivantes:

(i) détermination de la résistance électrique de la bobine (25) ;
(ii) comparaison de la résistance électrique déterminée avec des valeurs déterminées au préalable et détermination de la température de la bobine (25), de l'armature (26) et de l'induit (23);
(iii) détermination de la résistance magnétique de l'armature (26) et de l'induit (23);
(iv) détermination du courant induit dans l'armature (26) et dans l'induit (23); et
(v) injection d'un signal de tension rectangulaire dans la bobine (25) et mesure du courant circulant à travers la bobine (25).

2. Procédé selon la revendication 1, **caractérisé en ce que** l'on tient compte de la partie du courant induit dépendant de la température dans l'armature (26) et dans l'induit (23) lors de la mesure du courant circulant à travers la bobine (25) et on corrige en conséquence le résultat de la mesure.

3. Procédé selon la revendication 1 ou 2,
**caractérisé en ce que** l'on détermine les valeurs déterminées au préalable de la résistance électrique de la bobine (25) par un calibrage.

4. Procédé selon la revendication 3, **caractérisé en ce que** l'on effectue le calibrage avant la mise en service du frein hydraulique de véhicule et/ou à intervalles réguliers pendant le fonctionnement.

5. Frein hydraulique de véhicule, avec un boîtier de frein (1), dans lequel une chambre de pression de fonctionnement hydraulique (7) est délimitée par un piston de frein coulissant (6), qui peut être mis en liaison active avec un disque de frein pour produire un effet de freinage et dans lequel un dispositif de frein de stationnement agit sur le piston de frein (6) et peut être verrouillé au moyen d'un dispositif de verrouillage dans un état dans lequel le piston de frein (6) est en liaison active avec le disque de frein, dans lequel le dispositif de verrouillage est activé par un élément de transmission de force (2) qui peut être actionné à l'aide d'un actionneur électromagnétique (3), qui comporte au moins une bobine (25), une armature (26) et un induit (23), et dans lequel on détecte la position de l'élément de transmission de force (2) relié à l'induit (23) en déterminant la variation d'inductance de la bobine (25) en fonction du mouvement de l'induit, **caractérisé en ce qu'**il est prévu des moyens qui effectuent la détection de la position de l'élément de transmission de force (2) de telle manière que son résultat soit indépendant de la température ambiante, de la température de la bobine (25) et/ou de l'armature (26) et de l'induit (23) et **en ce que** les moyens exécutent les étapes suivantes:

(i) détermination de la résistance électrique de la bobine (25);

(ii) comparaison de la résistance électrique déterminée avec des valeurs déterminées au préalable et détermination de la température de la bobine (25), de l'armature (26) et de l'induit (23);

(iii) détermination de la résistance magnétique de l'armature (26) et de l'induit (23);

(iv) détermination du courant induit dans l'armature (26) et dans l'induit (23); et

(v) injection d'un signal de tension rectangulaire dans la bobine (25) et mesure du courant circulant à travers la bobine (25).

Fig. 1

## Fig. 2

I = f (τ,t)

## Fig. 3

I(t)= f (R$_{Magnetisch}$)

## Fig. 4

$R_{Magnetisch} = f\ (I(t1),T))$

## Fig. 5

$s = f\ (R_{Magnetisch})$

**Fig. 6**

s = f (I(t1),T))

I (t1)[A]

s [mm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062810 A1
- WO 2004027282 A1